# EUROPEAN PATENT APPLICATION

(11) **EP 0 827 901 A2**
(43) Date of publication of application: **11.03.1998**
(21) Application number: 97113635.3
(22) Date of filing: 07.08.1997
(51) Int. Cl.: B62K 25/00

(54) **Shock absorbing device for a bicycle**

(30) Priority: 04.09.1996 US 706463
(71) Applicant: Chen, Hui-Hsiung, Waipu Hsiang, Taichung Hsien (TW)
(72) Inventor: Chen, Hui-Hsiung, Waipu Hsiang, Taichung Hsien (TW)
(74) Representative: Robba, Pierpaolo

(57) **Abstract**

A shock absorbing device includes an integral V-shaped spring element (10) which has a first end connected to a first clamping element (20) and a second end connected to a second clamping element (30) wherein the first clamping element (20) is fixedly clamped to a lower end of a first tube and the second clamping element (30) is fixedly clamped to an upper end of a second tube which is slidably received in the first tube. The integral V-shaped spring element (10) is depressed when absorbing shock to make the second tube be moved into the first tube.

## Description

### BACKGROUND OF THE INVENTION

### 1. Field of the Invention

The present invention relates to a shock absorbing device and more particularly, to an improved shock absorbing device connected between two parts of a bicycle wherein the two parts are moved relative to each other in a longitudinal direction thereof.

### 2. Brief Description of the Prior Art

There is a shock absorbing device disposed in a head tube of a bicycle frame and is in contact with a top of a steerer tube which is inserted in the head tube. This kind of invention has been disclosed in U.S. Patent 3,936,076 to Kendall D. Probst, entitled as "Cycle Shock Absorber". The other kind of design of a bicycle shock absorber has been disclosed in U.S. Patent 2,233,313 to K. M. Hazelroth, entitled as "Bicycle Shock Absorber". Both of these two prior patents must change the structure of the steerer tube or add a bush between the steerer tube and the head tube such that the front fork is turned to the same direction when the handlebar is turned.

The present invention intends to provide an improved shock absorbing device which is an integral V-shaped spring element which has two ends thereof respectively connected to two parts having a relative movement with each other of a bicycle so as to mitigate and/or obviate the above-mentioned problems.

### SUMMARY OF THE INVENTION

The present invention provides a shock absorbing device which includes an integral V-shaped spring element which has a first end and a second end, a first clamping element and a second clamping element. The first end of the spring element is connected to a first clamping element which is fixedly connected to a lower end of a first tube and the second end of the spring element is connected to a second clamping element which is fixedly connected to an upper end of a second tube which is slidably received in the first tube.

It is an object of the present invention to provide an integral V-shaped spring element to disposed between two parts of a bicycle so as to absorb shocks by a deformation of the spring element.

It is another object of the present invention to provide a shock absorbing device connected between a handlebar stem and a front fork such that when rotating the handlebar, the front fork is rotated.

Other objects, advantages, and novel features of the invention will become more apparent from the following detailed description when taken in conjunction with the accompanying drawings.

### BRIEF DESCRIPTION OF THE DRAWINGS

Fig. 1 is an exploded view of a shock absorbing device in accordance with the present invention;
Fig. 2 is a side elevational view, partly in section, of the absorbing device disposed to a bicycle;
Fig. 3 is a plan view to show the places where the shock absorbing device is disposed, and
Fig. 4 is a perspective view of another embodiment of the device.

### DETAILED DESCRIPTION OF THE PREFERRED EMBODIMENTS

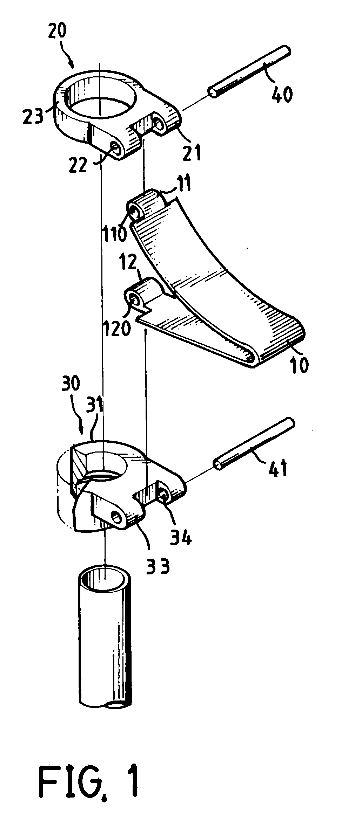

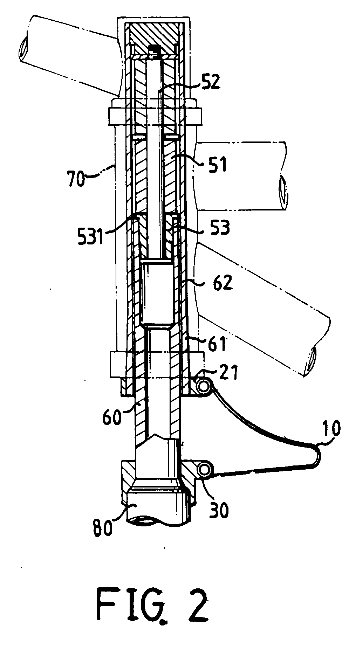

Referring to the drawings and initially to Figs. 1 and 2, a shock absorbing device in accordance with the present invention generally includes an integral V-shaped spring element 10 which has a first end and a second end, each of the first end and the second end thereof having a head 11/12 formed thereto and each of the heads 11, 12 having a passage 110/120 defined transversely therethrough. A first clamping element 20 has a first ring element 23 and two first lugs 21 extend radially from an outer periphery of the first ring element 23, each of the first lugs 21 having a first hole 22 defined transversely therein for a first pin 40 extending therethrough. The head 11 of the first end of the V-shaped spring element 10 is received between the two first lugs 21 and is positioned by extending the first pin 40 therethrough. The second clamping element 30 has a second ring element 31 and two second lugs 33 extend radially from an outer periphery of the second ring element 31. Each of the second lugs 33 has a second hole 34 defined transversely therein for a second pin 41 extending therethrough. The head 12 of the second end of the V-shaped spring element 10 is received between the two second lugs 33 and is positioned by extending the second pin 41 therethrough.

A handlebar stem 61 extends through a head tube 70 and has a lower end clamped by the first clamping element 20. A front fork 80 has a steerer tube 60 extending upwardly therefrom which is inserted in the handlebar stem 61 via the lower end of the handlebar stem 61 with a bush 62 disposed between an outer periphery of the steerer tube 60 and an inner periphery of the handlebar stem 61. The handlebar stem 61 has two rubber blocks 51 received therein by a bolt 52 extending therethrough. A support 53 is disposed to a lower end of the two rubber blocks 51 and is received in an upper end of the steerer tube 60, the support 53 having a flange 531 extending radially therefrom such that the upper end of the steerer tube 60 contacts a lower surface of the flange 531.

Accordingly, when a shock is transmitted upwardly from a front wheel (not shown) to the front fork 80, the steerer tube 60 is therefore extended to depress the rubber blocks 51 and the integral V-shaped spring element 10 is deformed simultaneously to absorb the shock.

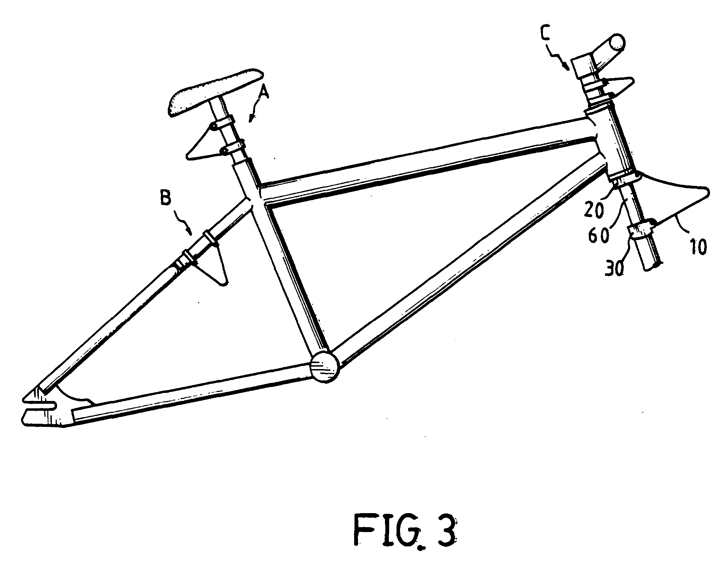

Fig. 3 shows places from A to C in a bicycle frame that are suitably equipped with the shock absorbing device in accordance with the present invention.

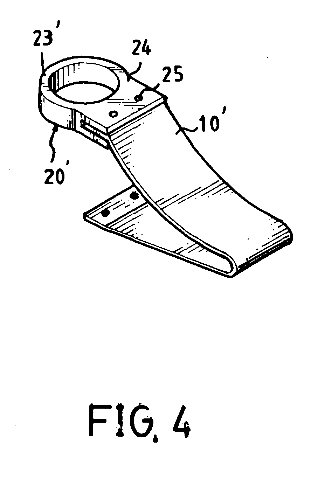

Fig. 4 shows one of many known ways of the engagements between the integral V-shaped spring element 10' and the first clamping element 20', wherein the first ring element 23' has two plates 24 extending radially therefrom between which one end of the V-shaped spring element 10' is fixedly received by rivets 25.

The present invention provides a simple way to dispose a V-shaped spring element to the bicycle frame. The V-shaped spring element disposed between the front fork and the handlebar stem plays a role of torque link such that when rotating the handlebar stem, the front fork is rotated simultaneously.

Although the invention has been explained in relation to its preferred embodiment, it is to be understood that many other possible modifications and variations can be made without departing from the spirit and scope of the invention as hereinafter claimed.

## Claims

1. A shock absorbing device comprising an integral V-shaped spring element which has a first end and a second end, said first end thereof connected to a first clamping element and said second end thereof connected to a second clamping element, said first clamping element fixedly connected to a lower end of a first a first tube and said second clamping element fixedly connected to an upper end of a second tube which is slidably received in said first tube.

2. The shock absorbing device as claimed in claim 1 wherein said first clamping element has a first ring element and two first lugs extending radially from an outer periphery of said first ring element, each of said first lugs having a first hole defined transversely therein for a first pin extending therethrough, said first end of said V-shaped spring element being received between said two first lugs and being positioned by extending said first pin therethrough.

3. The shock absorbing device as claimed in claim 1 wherein said second clamping element has a second ring element and two second lugs extending radially from an outer periphery of said second ring element, each of said second lugs having a second hole defined transversely therein for a second pin extending therethrough, said second end of said V-shaped spring element being received between said two second lugs and being positioned by extending said second pin therethrough.
